# EUROPÄISCHE PATENTANMELDUNG

(11) **EP 1 037 486 A2**
(43) Veröffentlichungstag der Anmeldung: **20.09.2000**
(21) Anmeldenummer: 00105502.9
(22) Anmeldetag: 15.03.2000
(51) Int. Cl.: H04Q 7/38

(54) **Verfahren und Vorrichtung zur Auswahl eines Übertragungskanals in einem Kommunikationssystem**

(30) Priorität: 16.03.1999 DE 19911695
(71) Anmelder: SIEMENS AKTIENGESELLSCHAFT, 80333 München (DE)
(72) Erfinder: Baumgarten, Hans-Georg, 81667 München (DE)

(57) **Zusammenfassung**

Das erfindungsgemäße Verfahren beruht auf einer Bewertungsfunktion, welche zuerst alle zur Verfügung stehenden Übertragungskanäle ermittelt. Anhand von gespeicherten Informationen, den Soll-Werten, und von zur Laufzeit ermittelten Informationen, den Ist-Werten, kann dann z. B. in dem Fall einer Datenübertragung, aus den zur Verfügung stehenden Übertragungskanälen der in diesem Moment geeignetste Übertragungskanal ausgewählt und angesteuert werden.

## Beschreibung

Verfahren zur Auswahl eines Übertragungskanals in einem Kommunikationssystem und Vorrichtung zur Durchführung des Verfahrens

Die Erfindung betrifft ein Verfahren in einen Kommunikationssystem, in dem Kommunikation und insbesondere die Ausführung von Telekommunikationsdiensten über eine Vielzahl verschiedener Transportkanäle möglich ist.

Ein Kommunikations-Teilnehmer kann heutzutage potentiell über eine Vielzahl verschiedener Transportkanäle und -netze kommunizieren. Unterschieden werden kann hierbei zwischen synchroner und asynchroner Kommunikation. Weiterhin können bestimmte Kommunikationsdienste nur bei bestimmten Endgeräten oder minimaler zur Verfügung stehender Dienstgüte ausgeführt werden.
Als Beispiel wird ein mobiles Endgerät genannt, welches über eine DECT-Schnittstelle, eine GSM-Schnittstelle und eine Schnittstelle zu einem tragbaren hand-held Rechner (z. B. PalmPilotder Firma US Robotics) verfügt. Der bestgeeignete Übertragungskanals für Datenübertragungen ist nicht eindeutig festlegbar, sondern ändert sich teilweise ständig.
Erst in der letzten Zeit, durch die Einführung der verschiedensten Typen von Kommunikationsendgeräten, Übertragungsdiensten und Anbietern ist die Nutzung verschiedener Übertragungskanäle relevant geworden.

Aufgabe der Erfindung ist es, ein Verfahren und eine Vorrichtung zur Auswahl eines bestgeeigneten Übertragungskanals anzugeben.

Diese Aufgabe wird gelöst durch ein Verfahren gemäß Patentanspruch 1 und eine Vorrichtung gemäß Patentanspruch 10.

Vorteilhafte Ausgestaltungen und Weiterbildungen sind in den Unteransprüchen angegeben.

Das erfindungsgemäße Verfahren beruht auf einer Bewertungsfunktion, welche zuerst alle zur Verfügung stehenden Übertragungskanäle ermittelt. Anhand von gespeicherten Informationen, den Soll-Werten, und von zur Laufzeit ermittelten Informationen, den Ist-Werten, kann dann z. B. in dem Fall einer Datenübertragung, aus den zur Verfügung stehenden Übertragungskanälen der in diesem Moment geeignetste Übertragungskanal ausgewählt und angesteuert werden.

Eine Auswahl des Übertragungskanals war bisher nicht notwendig. Durch die zunehmende Verwendung von mobilen Endgeräten kommt der Erreichbarkeits-Aspekt zum Tragen. Multifunktionale Endgeräte (z. B. Dual-Band Mobiltelefon, Kombi-Geräte aus Mobil-Telefon und elektronischem Organizer etc.) können verschiedene Dienste aus unterschiedlichen Netzen in Anspruch nehmen.

Unter einer Datenübertragung werden im Folgenden sowohl asynchrone Nachrichten (z. B. Email, SMS, Übertragung von Daten-Formularen, ortsabhängige Datenaktualisierung einer Internet-Anwendung wie ein Einkaufs-Navigations-System etc.) als auch synchrone Datenübertragung wie Internet-Zugriff, Telefonie etc. verstanden.

Die erfindungsgemäße Vorrichtung besitzt demgemäß eine erste Schnittstelle zur Kommunikation mit Kommunikations-Servern und mindestens eine zweite Schnittstelle zu einem Übertragungskanal zu einem Endgerät.
In Speichermitteln, zum Beispiel einer Datenbank, sind Informationen abgespeichert. Diese Informationen können spezielle Benutzerprofile enthalten, über Präferenzen, welche der Benutzer frei wählen kann, wie Kosten, Sicherheit, Bandbreiten oder maximale Latenzzeiten. Weiterhin sind dort diensteabhängige Informationen gespeichert: welche Minimalanforderungen stellt ein Dienst an einen Übertragungskanal oder an ein Endgerät.

Die Eigenschaften der Endgeräte, die bei einem Benutzer verfügbar sind, wie Bildschirmauflösung, Größe des Empfangsspeichers usw., können ebenfalls zur Auswahl des zu diesem Endgerät führenden Übertragungskanal berücksichtigt werden. Welche Kanal-Anbieter gibt es und welche Qualität von Übertragungskanälen bieten sie an.

Für die Ermittlung der Ist-Werte, also der aktuellen Verfügbarkeiten zur Laufzeit, kann eine Abfrage der benötigten Informationen gestartet werden.
Ein Ausführungsmittel zur Ausführung der erfindungsgemäßen Funktion vergleicht Soll- und Ist-Wert und ermittelt dann den besten Übertragungsweg.

Eine mögliche Bewertungsfunktion kann eine einfache Entscheidungstabelle darstellen, welche der Reihenfolge nach abgearbeitet wird:
1. DECT verfügbar mit TCP/IP Dienst ⇒ Kanal 1
2. DECT verfügbar ohne TCP/IP ⇒ Kanal 2
3. GSM verfügbar mit TCP/IP ⇒ Kanal 3
4. SMS ⇒ Kanal 4
5. default ⇒ Kanal 4.

Hierbei wird als aktuelle Information zur Laufzeit die Verfügbarkeit eines Übertragungsdienstes / -kanals oder die Erreichbarkeit des Teilnehmers / Endgerätes geprüft. Das Ergebnis ist in diesem einfachen Fall binär, also ja oder nein.
Für die verschiedenen Übertragungskanäle stehen zur Überprüfung bereits Funktionen bereit, etwa bei DECT die Funktion "Periodical Location Update".

Je mehr Informationen in der Bewertungsfunktion berücksichtigt wird, desto komplexer kann diese Bewertungsfunktion werden. Es ist auch denkbar, entsprechende Entscheidungstabellen aus Präferenz-Eingaben zu generieren.

In verschiedenen Ausgestaltungsformen der Erfindung werden zur Laufzeit Informationen ermittelt.
Dazu gehört z. B. der kanalspezifische Zustand eines Dienstes, wie
- aktiviert
- deaktiviert
- busy
- error
- overload.

Abhängig von dem kanalspezifischen Zustand des Dienstes kann auch zuerst eine Aktion ausgelöst werden, welche Einfluß auf den Zustand des Dienstes hat, wie etwa:
- starten
- Wiederholung
- Einstellung von Eigenschaften (z. B. Bildschirmauflösung des Endgerätes).

Kanaleigenschaften sind ebenfalls abprüfbar:
- Verfügbarkeit
- Bandbreite
- Latenzzeiten (z. B. Round Trip Time)
- Sicherheit
- Kosten.

Da durch die gespeicherten und ermittelten Informationen die Art des Endgerätes (oder zumindest seine entscheidenden Eigenschaften) bekannt sind, können vor der Weiterübertragung auch passende Anpassungen der übertragenen Daten vorgenommen werden.
- "elektronische Post": Benachrichtigung über das Eintreffen einer Nachricht am Server über SMS (oder vergleichbares), Übertragung nur des Absenders und des Betreffs, optional den Text der Mitteilung oder auch eingefügte Anhänge
- "Web Surfen": die Benutzung eines Web-Browsers wie Netscape ist nur möglich bei ausreichendem Speicher und Anzeigeeinheit (Größe, Auflösung, Farben etc.) möglich. Durch Datenreduktion (1. Schritt: "Tag-Reduction", 2. Schritt: Kompression auf bis zu 30%) kann mit angepaßter Browser-Software auf Endgerätseite und der Kenntnis darüber auf Server-Seite eine Benutzung ermöglicht werden.
- Übertragung von Bildern: abhängig von der ermittelten Bandbreite und dem zur Verfügung stehenden Speicher wird ein zu übertragendes Bild automatisch in Größe, Farbtiefe, Anzahl der Bildpunkte etc. angepaßt, um auf dem angesteuerten Endgerät empfangbar zu sein.

Im folgenden wird die Erfindung anhand von Ausführungsbeispielen erläutert. Dabei zeigen
Figur 1 eine erfindungsgemäße Vorrichtung,
Figur 2 die Übertragung von elektronischer Post, und
Figur 3 eine Übertragungssequenz von elektronischer Post.

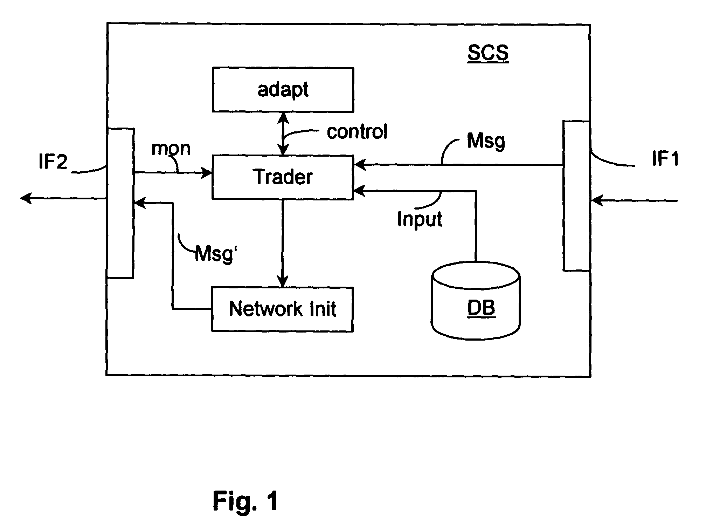

Figur 1 zeigt den Aufbau der erfindungsgemäßen Vorrichtung SCS zur Auswahl eines Übertragungskanals in einem Kommunikationsnetz.

### Beispiel 1: eine E-Mail liegt im E-Mail-Server vor.

Über die erste Schnittstelle IF1 wird, abhängig von Informationen, welche im E-Mail-Server zur Verfügung stehen, eine Benachrichtigung Msg oder der Nachrichtentext selber (siehe dazu auch oben) empfangen.
Die Bewertungsfunktion, welche in der Ausführungseinheit Trader läuft, hat nun in einer Speichereinrichtung DB gespeicherte Informationen Input als Sollwerte zur Verfügung. Weiterhin werden zu den zur Verfügung stehenden Übertragungskanälen über zweite Schnittstellen IF2 zur Laufzeit Informationen (Ist-Werte) mon gesammelt.
Stellt die Auswerteeinheit Trader fest, daß vor der Übertragung noch eine Konvertierung oder Komprimierung der Daten erforderlich ist, so wird dies bei dem Umwandlungsmittel adapt angefordert control.

Der ausgewählte Kanal wird initialisiert von der Initialisierungseinheit Network Init.
Danach wird die Nachricht Msg' an die zweite Schnittstelle IF2 an den ausgewählten Übertragungskanal übergeben.

### Beispiel 2:

Der Benutzer möchte Daten übertragen.

Der Dienst ist derzeit nicht verfügbar (z. B. kein Empfang über das Mobil-Telefonnetz). Das Endgerät verfügt über die Teilmenge des in der erfindungsgemäßen Vorrichtung (Service Capability Server, SCS, auch Gateway genannt) gespeicherten Informationen, welche es selber betrifft.
Anhand der Überprüfung der aktuellen Verfügbarkeit wird festgestellt, daß derzeit keine Verbindung möglich ist. Die zu übertragenden Daten können zwischengespeichert werden (queueing) und dann bei der nächsten Übertragungsmöglichkeit an das IF1 gesendet werden.

### Beispiel 3: Einkaufshilfe

Der Benutzer hat auf seinem mobilen Endgerät Orts-Informationen zur Verfügung. Weiterhin konfiguriert er sein Benutzerprofil dahingehend, daß er die zu kaufen gewünschten Gegenstände eingibt.
Regelmäßig wird nun überprüft, wo sich das Endgerät (der Benutzer) gerade befindet. Dann werden vom Server die in der Umgebung befindlichen Geschäfte analysiert, und sobald eine Übereinstimmung mit den im Benutzerprofil eingegebenen Daten gefunden wird, diese als Nachricht in geeigneter erfindungsgemäßer Weise an das mobile Endgerät übertragen.

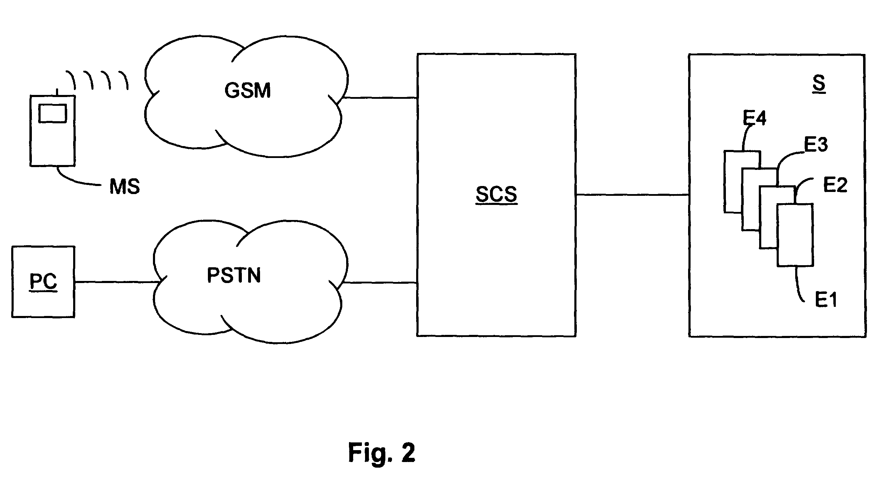

Figur 2 zeigt die in dem Kommunikationssystem für das erfindungsgemäße Verfahren in dem Beispiel "Übertragung von elektronischer Post" relevanten Teile.
Der E-Mail-Server S empfängt und speichert für einen Benutzer mehrere Nachrichten E1 - E4. In seinem Benutzerprofil konnte der Benutzer bereits bestimmte Nachrichten vorab priorisieren (z. B. nach Art des Absenders, Betreffs etc) . Über diese Priorisierung wird nun entschieden, ob der Benutzer informiert werden muß. Die Nachricht wird nun, wie zuvor in Figur 1 beschrieben, an die erfindungsgemäße Vorrichtung SCS übergeben.
Der Benutzer ist in diesem Fall über zwei Endgeräte erreichbar: über das Telefonnetz PSTN und geeignete Protokolle (PPP, SLIP) an einen PC, und über das Mobiltelefonnetz GSM an ein mobiles Endgerät MS.
Zuerst wird überprüft, ob die elektronischen Nachrichten an den Computer PC vollständig übertragen werden können. Eine zur Laufzeit durchgeführte Prüfung ergibt jedoch, daß dieses Endgerät zur Zeit nicht erreichbar ist (z. B. ausgeschaltet). Die Bewertungsfunktion hat jedoch als "zweitbeste" Verbindung diejenige über das Mobiltelefonnetz GSM zu dem mobilen Endgerät MS bestimmt. Da hier keine vollständige Übertragung der Nachricht vorgesehen ist, werden SMS Mitteilungen von dem SCS generiert und diese dann an das mobile Endgerät MS versendet.

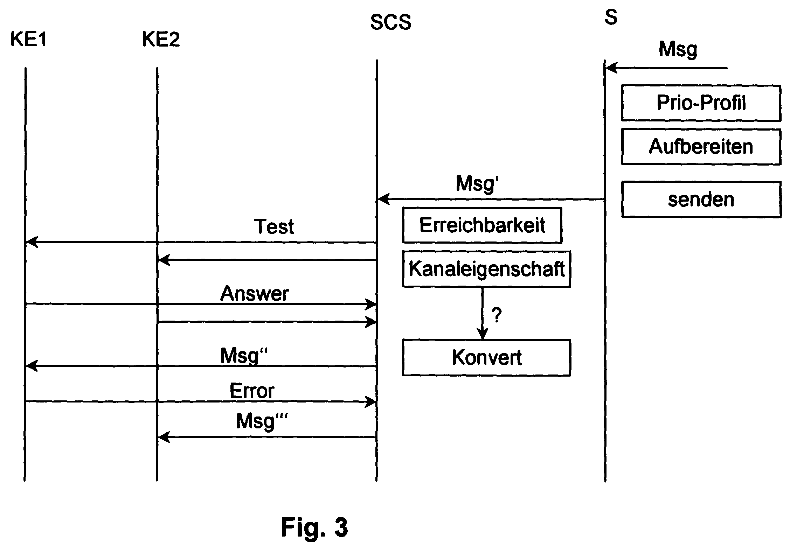

In Figur 3 ist ein Ablaufdiagramm der zuvor beschriebenen Vorgehensweise dargelegt.
Eine elektronische Nachricht Msg wird vom Nachrichten-Server S empfangen. Dieser überprüft, ob die Nachricht priorisiert zu behandeln ist, also der Empfänger über das Vorliegen einer Nachricht informiert werden soll. Fällt diese Prüfung positiv aus, so wird die Mitteilung aufbereitet und an die erfindungsgemäße Vorrichtung SCS gesendet Msg'.
Diese wiederum verwendet die ihr bekannten Informationen und ermittelt zusätzliche Laufzeit-Informationen Test, Answer wie die Erreichbarkeit des Teilnehmers über ein Endgerät und einen bestimmten Übertragungskanal, sowie ob die Kanaleigenschaften des jeweiligen Übertragungskanal für die Übertragung ausreichend sind.
Nach einer Festlegung der Reihenfolge der ausgewählten Übertragungskanäle durch die Bewertungsfunktion wird die Nachricht gegebenenfalls konvertiert konvert und dann über den ausgewählten Übertragungskanal an das Endgerät KE1 gesendet Msg''. Sollte sich zwischen der Überprüfung und dem Senden der Nachricht eine Veränderung ergeben haben, also ist z. B. das Endgerät nicht mehr erreichbar, Error, so wird der nächste beste Übertragungskanal ausgewählt und die Nachricht gegebenenfalls nochmals konvertiert an das Endgerät angepaßt übersendet Msg'''.

### Abkürzungsverzeichnis

- DB: Database (Datenbank)
- DECT: Digital Enhanced Cordless Telecommunications
- E: E-Mail
- GSM: Global System tor Mobile communication (Global einheitliches Funktelefonnetz)
- IF: Interface (Schnittstelle)
- KE: Kommunikationsendgerät
- mon: monitoring
- MS: Mobile Station
- Msg: Message (Nachricht, Datenübertragung)
- PC: Personal Computer
- PPP: point-to-point protocol
- PSTN: public switched telephone network (öffentliches Fernsprechwählnetz)
- S: Server
- SCS: Service Capability Server
- SLIP: serial line interface protocol
- SMS: Short Message Service
- TCP/IP: Transmission Control Protocol / Internet Protocol

## Patentansprüche

1. Verfahren zur Auswahl eines Übertragungskanals in einem Kommunikationssystem, wobei
- zuerst alle aktuell zur Verfügung stehenden Übertragungskanäle ermittelt werden, und
- dann eine Bewertungsfunktion den geeigneten Übertragungskanal auswählt, mit Hilfe von
- gespeicherten Informationen und
- zur Laufzeit ermittelten Informationen.

2. Verfahren nach Patentanspruch 1, dadurch gekennzeichnet, daß die gespeicherten Informationen Angaben enthalten über den Dienstgütebedarf, abhängig von dem Benutzer und/oder dem Dienst und/oder den Endgeräten und/oder ermittelten Kanaleigenschaften.

3. Verfahren nach einem der vorherigen Patentansprüche, dadurch gekennzeichnet, daß die zur Laufzeit ermittelten Informationen Informationen über aktuelle Kanaleigenschaften sind.

4. Verfahren nach einem der vorherigen Patentansprüche, dadurch gekennzeichnet, daß die zur Laufzeit ermittelten Informationen Informationen über den kanalspezifischen Zustand eines Dienstes sind.

5. Verfahren nach einem der vorherigen Patentansprüche, dadurch gekennzeichnet, daß die zur Laufzeit ermittelten Informationen Informationen über die Erreichbarkeit eines Teilnehmers sind.

6. Verfahren nach einem der vorherigen Patentansprüche, dadurch gekennzeichnet, daß als Ergebnis der Bewertungsfunktion eine Rangfolge der aktuell zur Verfügung stehenden Übertragungskanäle erstellt wird.

7. Verfahren nach einem der vorherigen Patentansprüche, dadurch gekennzeichnet, daß für weitere Aktionen derjenige Übertragungskanal gewählt wird, der an erster Stelle in der Rangfolge des Ergebnisses der Bewertungsfunktion ermittelt wurde.

8. Verfahren nach Patentanspruch 7, dadurch gekennzeichnet, daß wenn die Aktion mit dem gewählten Übertragungskanal fehlschlägt, der in der Rangfolge nächste Übertragungskanal gewählt wird.

9. Verfahren nach einem der vorherigen Patentansprüche, dadurch gekennzeichnet, daß nach Ermittlung des kanalspezifischen Zustand eines Dienstes eine Aktion initiiert wird, die den Zustand des Dienstes ändert.

10. Vorrichtung zur Auswahl eines Übertragungskanals in einem Kommunikationssystem, mit mindestens einer ersten Schnittstelle (IF1) zu einem Server, und mindestens einer zweiten Schnittstelle (IF2) zu einem Übertragungskanal, und Speichermitteln (DB) zur Speicherung von Informationen und ein Ausführungsmittel (Trader) für eine Bewertungsfunktion, wobei
- das Ausführungsmittel (Trader) von mindestens einer der ersten und zweiten Schnittstelle (IF1, IF2) Daten empfangen kann (Msg), und
- das Ausführungsmittel (Trader) über mindestens eine der ersten und zweiten Schnittstelle (IF1, IF2) zur Laufzeit Informationen ermitteln kann (mon) und
- das Ausführungsmittel (Trader) aus den Speichermitteln (DB) Informationen für die Bewertungsfunktion erhält.

11. Vorrichtung nach Patentanspruch 10 dadurch gekennzeichnet, daß die Speichermittel (DB) zur Speicherung von Informationen über den Dienstgütebedarf, abhängig von dem Benutzer und/oder dem Dienst und/oder den Endgeräten und/oder ermittelten Kanaleigenschaften verwendet wird.

12. Vorrichtung nach Patentanspruch 10 oder 11 dadurch gekennzeichnet, daß ein Umwandlungsmittel (adapt) die empfangenen Daten (Msg) anpaßt an die Dienstgüte des von der Bewertungsfunktion ermittelten Übertragungskanals (Msg').

13. Vorrichtung nach Patentanspruch 10, 11 oder 12 dadurch gekennzeichnet, daß eine Initialisierungseinheit Network Init den ausgewählten Übertragungskanal initialisiert.
